# EUROPÄISCHE PATENTSCHRIFT

(11) **EP 3 768 564 B1**
(45) Veröffentlichungstag und Bekanntmachung des Hinweises auf die Patenterteilung: **05.01.2022**
(21) Anmeldenummer: 19723676.3
(22) Anmeldetag: 25.04.2019
(51) Int. Cl.: B61C 17/04

(54) **MODULARES FUSSPODEST FÜR EINEN FÜHRERSTAND EINES SCHIENENFAHRZEUGS**
MODULAR FOOT PLATFORM FOR A DRIVER'S CAB OF A RAIL VEHICLE
REPOSE-PIED MODULAIRE POUR UN POSTE DE CONDUITE D'UN VÉHICULE SUR RAILS

(30) Priorität: 07.05.2018 DE 102018207035
(43) Veröffentlichungstag der Anmeldung: 27.01.2021
(73) Patentinhaber: Siemens Mobility GmbH, 81739 München (DE)
(72) Erfinder: HENGSTENBERG, Thomas, 82194 Gröbenzell (DE); BEZOLD, Michael, 80997 München (DE)
(86) Internationale Anmeldenummer: PCT/EP2019/060589
(87) Internationale Veröffentlichungsnummer: WO 2019/214956

(56) Entgegenhaltungen:
- WO-A1-2015/106807
- AU-A1- 2003 203 693
- CN-A- 107 933 584
- CN-A- 107 963 088
- CN-U- 206 678 987
- DE-U1-202016 004 888
- JP-A- 2011 143 811
- US-A1- 2013 220 168

## Beschreibung

Die Erfindung betrifft ein modulares Fußpodest für einen Führerstand eines Schienenfahrzeugs, ein Verfahren zur Montage eines solchen modularen Fußpodests sowie ein Schienenfahrzeug mit einem darin angeordnetem modularen Fußpodest.

Bei Schienenfahrzeugen bzw. einem angetriebenem Eisenbahnfahrzeug, das zur Zugförderung dient, werden in der Regel höhenverstellbare Fahrersitze verwendet, um Fahrzeugführern bzw. Lokführern unterschiedlichster Größe die erforderliche Sicht nach vorne zu ermöglichen. Damit die Fahrzeugführer auch weiterhin mit dem Fuß die erforderlichen Pedale erreichen können und ihre Füße bequem abstützen können, sind ebenfalls höhenverstellbare Fußpodeste erforderlich.

In der DE 20 2016 004 888 U1 wird daher vorgeschlagen, ein Fußpodest mittels einer Scherenkonstruktion von unten nach oben zu verfahren. Hierbei sind zwei Hubscheren bzw. ein Hubscherenpaar zwischen einer Bodenplatte und einer Trittplatte angeordnet und jeweils an diesen befestigt. Zudem weist das Fußpodest eine mechanische Federeinheit in Kombination mit einem Pneumatikzylinder auf. Da die Bodenplatte, die Trittplatte und die Hubscheren eine Einheit bilden, muss das gesamte Fußpodest je nach Fahrzeug bzw. Projektanforderung individuell angepasst und gestaltet werden. Hierdurch kann es passieren, dass aufgrund von nur kleinen Änderungen, wie beispielsweise einer geänderten Fußnischenabmessung im Führerstand, ein komplett neues Fußpodest gestaltet werden muss. Die Herstellung bzw. die Montage eines komplett neuen Fußpodests kann aber sehr zeit- und somit auch sehr kostenintensiv sein.

In der Regel erfolgt zudem die Betätigung der Höhenverstellung mittels eines Bedienelements räumlich vom Fußpodest getrennt, z. B. mittels eines am Fahrerpult angeordneten Schalters bzw. Tasters. Das Fahrerpult ist dabei in der Regel oberhalb des Fußraums im Führerstand angeordnet. Dies erhöht zusätzlich den Montageaufwand, wenn das Bedienelement und eine Verbindung vom Bedienelement zum Fußpodest an das Fahrerpult angepasst werden muss.

Aus der Druckschrift CN 107 933 584 A ist ein Fahrerpedal eines Schienenfahrzeugs bekannt, das über eine Einstellfunktion verfügt. Insbesondere beschreibt das Dokument CN 107 933 584 A ein modulares Fußpodest für einen Führerstand eines Schienenfahrzeugs, umfassend zumindest die folgenden Komponenten:
- einen Grundrahmen, welcher einen Höhenverstellmechanismus aufweist,
- einen auf dem Grundrahmen angebrachten Zwischenrahmen
- ein auf dem Zwischenrahmen angeordnetes Trittblech,
- bei dem der Höhenverstellmechanismus zumindest ein Bedienelement umfasst, welches zumindest teilweise in einem Bereich auf oder oberhalb der vom Grundrahmen wegweisenden Oberseite des Trittblechs angeordnet ist.

Es ist Aufgabe der vorliegenden Erfindung, ein eigenständig höhenverstellbares Fußpodest bereitzustellen, dass eine Vielzahl von Fahrzeug- und Projektanforderungen erfüllt, wobei die Montage des Fußpodests schnell, einfach und kostensparend erfolgt.

Diese Aufgabe wird durch ein modulares Fußpodest gemäß Patentanspruch 1 sowie durch ein Schienenfahrzeug gemäß Patentanspruch 10.

Das erfindungsgemäße modulare Fußpodest für einen Führerstand bzw. eine Steuerkanzel eines Schienenfahrzeugs bzw. Triebfahrzeugs umfasst zumindest die folgenden Komponenten:
Eine Komponente ist ein Grundrahmen, welcher als eine Art standardisierter Grundrahmen für verschiedene Fahrzeuge, wie z. B. Straßenbahnen, Metro, Lokomotiven, Regionalzüge und Hochgeschwindigkeitszüge sowie für verschiedenste Kundenprojekte verwendet werden kann. Der Grundrahmen weist dabei einen Höhenverstellmechanismus auf, mit dem das Fußpodest in eine beliebige Höhe verfahren werden kann. Die Grundabmessung des Grundrahmens und der dazu gehörende Höhenverstellmechanismus sind auch bei unterschiedlichen Anforderungen immer identisch und müssen daher nicht extra abgeändert bzw. angepasst werden.

Eine weitere Komponente des modularen Fußpodests ist ein auf dem Grundrahmen angebrachter bzw. aufgelegter individueller Zwischenrahmen bzw. Versteifungsrahmen. Der Zwischenrahmen weist zum einen eine stabilisierende Funktion für den Grundrahmen und eine tragende Funktion für ein Trittblech bzw. die Fußauflage eines Fahrzeugführers auf. Dieser Zwischenrahmen kann so ausgestaltet und auf dem Grundrahmen aufgebracht werden, dass er individuell an eine Fußnische in einem Führerstand gemäß der Fahrzeug- und Projektanforderung angepasst ist. Es handelt sich also bei dem Zwischenrahmen nicht um eine standardisierte Einzelbaugruppe (wobei als "Einzelbaugruppe" auch ein einzelnes Bauteil verstanden werden kann), sondern um eine fahrzeug- bzw. projektspezifische Einzelbaugruppe.

Eine dritte Komponente ist ein auf dem Zwischenrahmen aufliegendes Trittblech. Das Trittblech oder auch beispielsweise ein zusätzliches Blech, das die Seitenwände des Grundrahmens umgibt, so dass beispielsweise kein Fuß etc. einer Person zwischen den Höhenverstellmechanismus gelangen kann, können ebenfalls projektspezifisch ausgestaltet werden.

Der Höhenverstellmechanismus umfasst zumindest ein Bedienelement mit dem der Höhenverstellmechanismus ausgelöst und welches beispielsweise durch Antippen eines Fahrzeugführers mit dem Fuß bedient werden kann. Das Bedienelement ist dabei individuell für eine Fußbedienung zumindest teilweise in einem Bereich auf oder oberhalb der vom Grundrahmen wegweisenden Oberseite des Trittblechs angeordnet. Somit kann das Bedienelement vorzugsweise direkt auf einer Oberfläche des Trittblechs angeordnet sein. Das Bedienelement kann aber ebenso auch vorzugsweise in einem kurzen Abstand über der Oberfläche eines Trittblechs angeordnet sein und dazu beispielsweise, wie später noch erläutert wird, auf einer Art Abdeckblech oder dergleichen aufliegen. Ebenso kann es nur teilweise durch das Trittblech nach oben soweit hindurchragen, dass es vom Fahrzeugführer mit dem Fuß bedient werden kann.

Auch weitere Bedienelemente wie beispielsweise ein Pedal einer Sicherheitsfahrschaltung (oft auch als Totmannschaltung bezeichnet), im Folgenden Sifa-Pedal genannt, können auf dem Trittblech angeordnet sein. Solche Sicherheitsfahrschaltungen dienen dazu einen Zug per Zwangsbremsung zum Stehen zu bringen, wenn ein Schienenfahrzeugführer während einer Fahrt handlungsunfähig wird. Eine Hornbetätigung, ein Schalter, um beispielsweise Spiegel einzuklappen, oder dergleichen, können auch auf dem Trittblech angeordnet werden. Diese Bedienelemente können individuell ausgestaltet und angeordnet sein.

Es soll in diesem Zusammenhang darauf hingewiesen werden, dass sich die Begriffe "oben" und "unten" etc. allgemein und auch im Rahmen der vorliegenden Erfindung im Folgenden auf Ausrichtungen in einer üblichen Anordnung im Raum beziehen. Dabei entspricht "oben" in Richtung einer Deckenwand weisend und "unten" in Richtung eines Bodens weisend. Der Begriff "hinten", in Bezug auf das Fußpodest, bedeutet dabei in Richtung auf eine vorgesehene Fahrzeugführerposition (bei einer bestimmungsgemäßen Montage bzw. Nutzung des Fußpodests im Schienenfahrzeug), d.h. die Seite die näher am Fahrzeugführer ist. Hier befindet sich der "Fersenpunkt", der einen Punkt bzw. Bereich beschreibt, auf welchem die Ferse eines Fahrzeugführers auf dem Fußpodest während einer Fahrt im Schienenfahrzeug normalerweise bzw. bestimmungsgemäß aufliegt. Der Begriff "vorne", in Bezug auf das Fußpodest, bezieht sich dabei auf eine Front des Fußpodest, welche in Richtung ins Innere der Fußnische weist, also vom Fahrzeugführer weg und normalerweise in Richtung zur Front des Schienenfahrzeugs. Als "Längsrichtung" des Fußpodests wird die Richtung zwischen Fersenpunkt und der Front des Fußpodests definiert, d. h. die Längsrichtung verläuft in Fahrtrichtung eines Schienenfahrzeugs, in dem sich das Fußpodest befindet.

Das erfindungsgemäße modulare Fußpodest wird also im Wesentlichen aus drei modularen Einzelbaugruppen gebildet. Durch diese Reduzierung der Teilevielfalt kommt es somit gleichzeitig auch zu einer Reduzierung des Wartungsaufwandes. Durch den modularen Aufbau mit einem "standardisiertem" Grundrahmen für eine Vielzahl von Schienenfahrzeugen und durch den anpassbaren Zwischenrahmen und das individuell gestaltbare Trittblech ist das Fußpodest bei gleichzeitiger Reduzierung der Teilevielfalt dennoch sehr flexibel auf projekt- und kundenspezifische Anforderungen anpassbar.

Da das Bedienelement ebenfalls im Fußpodest integriert ist, ist auch insoweit ein geringerer Montageaufwand nötig, als wenn das Bedienelement beispielsweise auf dem Fahrerpult angebracht wird.

Durch die einfache und schnelle Montage des Fußpodests sowie durch die vereinfachte Anpassung des Fußpodests kann es insbesondere zu einer enormen Kosteneinsparung kommen.

Das modulare Fußpodest kann während der Fertigung eines beliebigen Schienenfahrzeugs in einer Fußnische eines Führerstands angeordnet bzw. eingebaut werden.

Das erfindungsgemäße modulare Fußpodest kann aber auch in einen Führerstand eines bereits bestehenden Schienenfahrzeugs eingebaut werden, um dieses so nachzurüsten.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Um die Höhe des Fußpodest leicht und stufenlos einzustellen umfasst der Höhenverstellmechanismus des Grundrahmens einen Scherenhubtisch bzw. einen Scherenmechanismus mit zumindest einer Hubschere bevorzugt zwei parallel arbeitenden bzw. parallel montierten Hubscheren. Diese Hubschere verbindet ein Grundrahmenunterteil (Basis) des Scherenhubtisches bzw. Grundrahmens mit einem zum Grundrahmenunterteil beweglichen Grundrahmenoberteil.

Der Scherenmechanismus weist vorzugsweise zwei gelenkige Festlager und zwei gelenkige Loslager auf, wobei die beiden vorderen Lager, vorzugsweise lose sind und die beiden hinteren Lager (im Bereich des Fersenpunkts) vorzugsweise fest sind.

Vorzugsweise ist die Hubschere, nicht wie sonst ebenfalls üblich mittig im Grundrahmen angeordnet, sondern seitlich im Grundrahmen. Dies hat den Vorteil, dass im Grundrahmen, beispielsweise Leitungen von Bedienelementen etc. leichter verlegt und untergebracht werden können.

Als Aktor kann der Höhenverstellmechanismus beispielsweise einen Hydraulikzylinder umfassen, der z. B. von einem Spindelmotor betrieben wird. Bevorzugt umfasst der Höhenverstellmechanismus als Aktor aber zumindest eine Feder, besonders bevorzugt zumindest eine Gasdruckfeder. Der Aktor, vorzugsweise die Feder bzw. Gasdruckfeder, ist parallel zur Hubschere einerseits mit dem Grundrahmenunterteil und andererseits mit dem Grundrahmenoberteil des Grundrahmens, vorzugsweise beweglich, z. B. gelenkig, verbunden.

Zur Auslösung des Aktors, beispielsweise Federkraft, insbesondere der Druckkraft der Gasdruckfeder, umfasst der Höhenverstellmechanismus bevorzugt zumindest einen Bowdenzug, welcher mit dem Aktor, insbesondere der Feder bzw. Gasdruckfeder, und dem Bedienelement verbunden ist.

Tippt der Fahrzeugführer z. B. mit einer Fußspitze, beispielsweise von hinten, also vom Fersenpunkt aus gesehen, das Bedienelement an, so wird die Gasdruckfeder gelöst und das Fußpodest verfährt von unten nach oben. Beim Lösen des Bedienelements verharrt das Fußpodest dann in der gewünschten Höhenposition des Fahrzeugführers. Durch gleichzeitiges Belasten des Fußpodests und Drücken des Bedienelements kann der Fahrzeugführer das Fußpodest wieder niedriger stellen.

Bei Bedarf können gegebenenfalls zusätzliche Aktoren, insbesondere Gasdruckfedern, in den Grundrahmen bzw. Hubmechanismus integriert werden, welche in einer untersten Position des Fußpodests die Gasdruckfedern unterstützen können.

Damit der Bowdenzug beispielsweise nicht vom Scherenmechanismus während einer Höhenverstellung eingeklemmt wird, kann der Bowdenzug an einer Befestigung, beispielsweise einem Montageblech, des Grundrahmens angebracht werden. Um den Bowdenzug am Montageblech anzuordnen, weist dieses vorzugsweise Löcher auf, an denen der Bowdenzug z. B. mit Kabelbindern oder dergleichen auf seiner Wegstrecke von der Gasdruckfeder zum Bedienelement angebracht bzw. fixiert werden kann. Somit wird ein ausreichender Längenausgleich des Bowdenzugs auf Grund des Weges der Gasdruckfeder und eine ausreichend feste Verlegung beispielsweise gegen ein Verhaken und/oder Abknicken des Bowdenzugs realisiert.

Damit ein Fahrzeugführer das Bedienelement auf dem Trittblech gut erreichen kann, während er beispielsweise auf dem Fahrerstuhl sitzt, um wie bereits erwähnt, die Höhe des Fußpodests, vorzugsweise um mindestens bis zu 150 mm, zu verändern, ist eine Unterkante des Bedienelements bevorzugt in einem Abstand von maximal 10 mm und besonders bevorzugt von maximal 5 mm auf der vom Grundrahmen wegweisenden Oberseite des Trittblechs angeordnet.

Das Bedienelement zur Höhenverstellung des Fußpodests wird in der Regel nur einmal vor Fahrtantritt vom Fahrzeugführer bedient und eher selten während der Fahrt. Andere Taster oder Schalter, wie beispielsweise ein Sifa-Pedal und ein Horntaster, müssen dauerhaft oder relativ schnell und einfach erreicht werden. Um für solche Taster oder Schalter mehr Platz zu schaffen, ist das Bedienelement für die Höhenverstellung zwar noch für die Füße eines Fahrzeugführers bequem erreichbar, aber vorzugsweise außerhalb eines Hauptaktionsbereichs der Füße angeordnet. Der Hauptaktionsbereich beschreibt dabei einen Bereich auf dem Trittblech, welchen der Fahrzeugführer besonders schnell und leicht mit nur kleinsten Bewegungen der Füße erreichen kann. In diesem Bereich können nun frei wählbar Taster und Schalter angeordnet werden, welche häufig bzw. schnell vom Fahrzeugführer bedient werden müssen.

In einem besonders bevorzugten Ausführungsbeispiel des erfindungsgemäßen Fußpodests weist das Trittblech eine Aussparung bzw. Öffnung für das Bedienelement auf.

Das Bedienelement kann dann vorteilhafterweise während der Montage so an dem Grundrahmen oder bevorzugt dem Zwischenrahmen montiert werden, dass das Bedienelement durch die Aussparung im Trittblech hinausragt. Für eine besonders bequeme Montage ist das lichte Maß der Aussparung vorzugsweise größer als die Außenabmessungen des Bedienelements, d. h. das Bedienelement kann komplett durch die Aussparung geschoben werden. Die Aussparung für das Bedienelement kann dabei ein Loch im Trittblech sein oder aber auch eine Aussparung am Rand des Trittblechs, wenn beispielsweise das Bedienelement am Rand des Fußpodest außerhalb des oben beschriebenen Hauptaktionsbereichs angeordnet ist.

Bevorzugt ist zwischen dem Bedienelement und der vom Grundrahmen wegweisenden Oberseite des Trittblechs zumindest ein Abdeckblech angeordnet, welches die Aussparung des Trittblechs zumindest teilweise abdeckt.

Das Abdeckblech kann bei Bedarf leicht wieder abgenommen werden, sodass beispielsweise der Bowdenzug und die Gasdruckfeder mitsamt des Bedienelements relativ einfach und schnell entfernt und beispielsweise gewartet oder ausgetauscht werden kann. Ein leichter Zugang und Austausch der Trittblechbedienelemente und deren Leitungen kann zudem z. B. durch ein abnehmbares Trittblech, wie bereits erwähnt, erreicht werden.

Um die Montage weiter zu vereinfachen, weist auch der Zwischenrahmen bevorzugt zumindest eine Aussparung auf, durch welche beispielsweise Wartungsarbeiten des unter dem Zwischenrahmen liegenden Höhenverstellmechanismus durchgeführt werden können, ohne dass es von Nöten ist, den Zwischenrahmen extra vom Grundrahmen abzumontieren.

Um eine möglichst gute ergonomische Ausrichtung für den Fuß eines Fahrzeugführers zu erreichen, ist das Trittblech nicht horizontal, sondern in Längsrichtung des Grundrahmens schräg nach vorne ansteigend ausgerichtet. Hierdurch kann auch der Fuß schräg auf das Trittblech aufgesetzt werden, wobei sich ein Fersenpunkt an einer unteren Position des Trittblechs befindet.

Dazu weist der Grundrahmen bevorzugt einen oder mehrere Auflagebereiche auf, die in Längsrichtung des Grundrahmens entsprechend schräg nach vorne ansteigend ausgerichtet sind und auf die der Zwischenrahmen oder das Trittblech aufgelegt werden können.

Die Auflagebereiche haben weiterhin den Vorteil, dass sie die Bauhöhe beschränken können. Denn ein Kriterium bei der Konstruktion eines Fußpodestes ist die Erfüllung des Höhenverstellbereichs und der Lage des Fersenpunktes nach der Norm EN161861/1. Auf Grund dieser Kriterien weisen die meisten bestehenden Fußpodeste einen relativ großen Einbauraum auf.

Um die Einbauhöhe zu beschränken und dennoch unterschiedliche Ausrichtungswinkel des Trittblechs zu ermöglichen, ohne dieses austauschen zu müssen, weist der Grundrahmen zumindest zwei standardisierte Auflagebereiche mit unterschiedlichen Winkelstellungen zu einer Unterseite des Fußpodests auf. Die Unterseite stellt dabei eine virtuelle Ebene dar, auf der das Fußpodest steht.

Die Auflagebereiche mit unterschiedlichen Winkelstellungen können beispielsweise mittels eines abgeknickten Auflagewinkels realisiert werden, der vorzugsweise entsprechend der Anzahl an unterschiedlichen Winkelstellungen, eine Anzahl an Abknickungen aufweist. Die Auflage bzw. der Auflagewinkel weist vorzugsweise einen Auflagebereich mit einer 8° Neigung bzw. Winkelstellung und vorzugsweise einen Auflagebereich mit einer 15° Neigung bzw. Winkelstellung auf.

Die Auflagebereiche bzw. der Auflagewinkel sind vorzugsweise an einem vorderen oberen Bereich des Grundrahmens, d.h. am Grundrahmenoberteil bzw. oben am Hubtisch, angeordnet, z.B. als ein vom Grundrahmenoberteil abgewinkeltes Blechteil. Zusätzlich weist der Grundrahmen vorzugsweise auch eine untere Auflage auf, die einen hinteren Teil des Grundrahmens umfasst und sich unterhalb der oberen Auflagebereiche befindet. Soll nun beispielsweise eine 15° Neigung des Trittblechs erreicht werden, so wird der Zwischenrahmen auf den Auflagebereich mit einer 15° Neigung des oberen Auflagewinkels gelegt und auf die untere Auflage. Weist die untere Auflage nur eine Winkelstellung auf, beispielsweise die 15 ° Neigung anstatt der 8° Neigung des oberen Auflagewinkels, so kann vorzugsweise ein entsprechendes Zwischenelement auf die untere Auflage gelegt werden, um so einen Ausgleich zwischen der 15° Neigung des unteren Auflagewinkels des abgewinkeltes Blechteils und der 8° Neigung der oberen Auflage, die einen hinteren Teil des Grundrahmens umfasst zu erreichen. Aber auch weitere Auflagebereiche bzw. Auflagen mit anderen Neigungsgraden bzw. Winkelstellungen können verwendet werden, wenn dies gewünscht ist.

Je nachdem also auf welchem Auflagebereich der Zwischenrahmen bzw. das Trittblech aufgelegt wird, können so unterschiedliche Neigungen bzw. Ausrichtungen des Trittblechs erreicht werden.

Auch eine Anordnung der einzelnen Komponenten des Höhenverstellmechanismus im Fußpodest kann einen Einfluss auf die Höhe des entstehenden Fußpodests haben. Aus diesem Grund ist die Feder bzw. Gasdruckfeder vorzugsweise in einer Längsrichtung im Grundrahmen des erfindungsgemäßen Fußpodests angeordnet. Auch die Hubschere kann vorzugsweise in einer Längsrichtung im Grundrahmen des erfindungsgemäßen Fußpodests angeordnet sein. Dadurch kann eine relativ geringe Bauhöhe erreicht werden. Bevorzugt wird so eine Bauhöhe von maximal 70 mm, besonders bevorzugt von maximal 58 mm, des Hubtisches erreicht, in dem der Hubmechanismus angeordnet ist, d.h. des Grundrahmens ohne die zusätzlichen Komponenten wie das vom Grundrahmenoberteil abgewinkelte Blechteil zur Realisierung der Winkelstellung des Trittblechs.

Ein weiteres Mittel um das Fußpodest relativ kompakt zu gestalten, ist es, den Zwischenrahmen in der Längsrichtung des Fußpodests vorzugsweise schräg nach unten hinten über den Grundrahmen hinauszuziehen. Hierdurch reicht der Zwischenrahmen in Längsrichtung des Fußpodests bevorzugt mindestens 50 mm, besonders bevorzugt mindestens 200 mm über den Grundrahmen nach hinten, also in Richtung auf die vorgesehene Fahrzeugführerposition, hinaus. Durch das Herausziehen des Zwischenrahmens, kann somit auch der Fersenpunkt weiter in Richtung zum Fahrzeugführer bzw. unten gezogen werden, wobei ein Fersenpunkt auf dem Trittblech unterhalb einer Oberkante des Hubtisches liegt.

Der Fersenpunkt liegt dabei bevorzugt mindestens 30 mm unterhalb der Oberkante des Hubtisches, besonders bevorzugt ca. 34 mm unterhalb der Oberkante des Hubtisches.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
- Figur 1: eine perspektivische Darstellung eines Grundrahmens zur Montage eines Ausführungsbeispiels eines erfindungsgemäßen modularen Fußpodests,
- Figur 2: eine perspektivische Darstellung des Grundrahmens gemäß Figur 1 mit einem darauf montiertem Zwischenrahmen nach einem zweiten Montageschritt zur Montage des modularen Fußpodests,
- Figur 3: eine perspektivische Darstellung des Grundrahmens und des Zwischenrahmens gemäß Figur 2 mit einem auf dem Zwischenrahmen angeordneten Bedienelement nach einem dritten Montageschritt zur Montage des modularen Fußpodests,
- Figur 4: eine perspektivische Darstellung des Grundrahmens, des Zwischenrahmens und des Bedienelements gemäß Figur 3 mit einem auf dem Zwischenrahmen aufgelegtem Trittblech nach einem vierten Montageschritt zur Montage des modularen Fußpodests,
- Figur 5: eine perspektivische Darstellung des Grundrahmens, des Zwischenrahmens, des Bedienelements und des Trittblechs gemäß Figur 4 mit zwei Abdeckblechen zwischen dem Trittblech und einer Unterkante des Bedienelements nach einem fünften Montageschritt zur Montage des modularen Fußpodests,
- Figur 6: eine Schnittansicht des Grundrahmens und des Zwischenrahmens des modularen Fußpodest in dem Montagezustand nach Figur 4 in einer ersten Position,
- Figur 7: eine Schnittansicht des Grundrahmens und des Zwischenrahmens des Fußpodest wie in Figur 6, jedoch in einer zweiten Position.
- Figur 8: schematisch eine Draufsicht auf einen Führerstand eines Triebfahrzeug mit einem im Führerstand angeordnetem modularen Fußpodest.

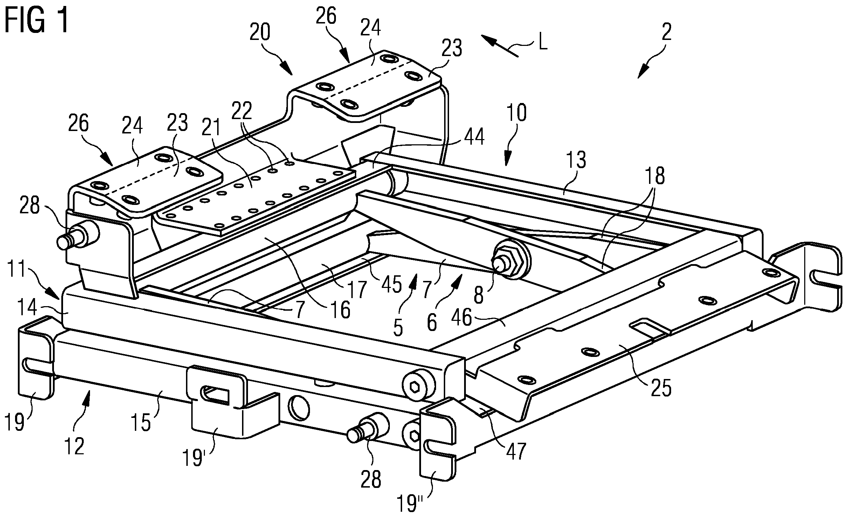

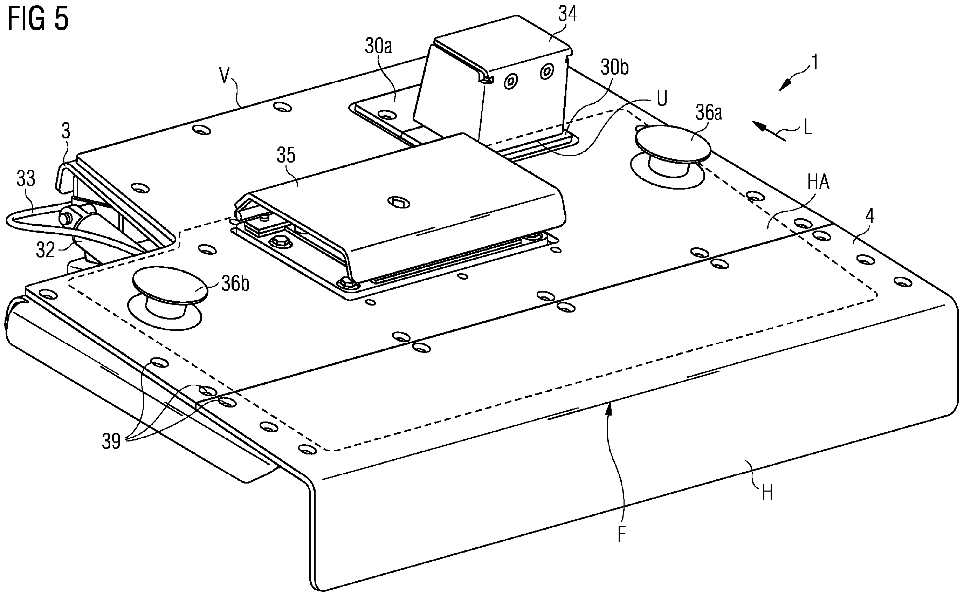

Die Figuren 1 bis 5 zeigen den Aufbau eines erfindungsgemäßen modularen Fußpodests 1 und werden daher gemeinsam beschrieben.

Figur 1 zeigt dabei einen Grundrahmen 2 des modularen Fußpodests 1. Der Grundrahmen 2 weist einen Höhenverstellmechanismus 5, hier einen Hubtisch 6 bzw. Scherenhubtisch 6 mit zwei Hubscheren 7 auf. Die beiden Hebel 18 der Hubscheren 7 sind dabei an eine Mittelachse bzw. Drehachse der Hubscheren 7 über ein Befestigungsmittel 8, hier eine Schraube 8, gelenkig miteinander verbunden. Die Hebel 18 der Hubscheren 7 sind endseitig jeweils an einem Gestell 10 des Grundrahmens 2 befestigt.

Die Hubscheren 7 sind dabei in Längsrichtung L parallel zueinander im Gestell 10 angeordnet, und befinden sich seitlich rechts und links am Gestell 10, wodurch beispielsweise Leitungen oder dergleichen von Bedienelementen leichter im Grundrahmen 2 angeordnet werden können. Der Grundrahmen 2 ist hier also symmetrisch aufgebaut.

Das Gestell 10 umfasst zwei im Wesentlichen rechteckige übereinander liegende Rahmen 11, 12. Der untere Rahmen 12 bildet hier das Grundrahmenunterteil 12, der obere Rahmen 11 das Grundrahmenoberteil 11. Das Grundrahmenunterteil 12 und das Grundrahmenoberteil 11 des Gestells 10 sind über die Hubschere 7 beweglich, nämlich höhenverstellbar, miteinander verbunden und bilden so zusammen mit den Hubscheren 7 den Hubtisch 6.

Der obere Rahmen 11 und der untere Rahmen 12 weisen jeweils an beiden Seiten in Längsrichtung L verlaufende Längsprofile 13, 14, 15, 27 auf sowie vorne und hinten quer verlaufende Querprofile 44, 45, 46, 47, die die Längsprofile 13, 14, 15, 27 auf den beiden Seiten untereinander verbinden.

Die sich in Längsrichtung L erstreckenden Profile 13, 14 des oberen Rahmens 11 und die darunter liegenden Profile 15 (aufgrund der Perspektive in Figur 1, ist hier ein Profil nicht zu sehen) des unteren Rahmens 12 weisen hier jeweils eine Gleitschiene auf. Zwischen den Gleitschienen des oberen Rahmens 11 und des unteren Rahmens 12 erstrecken sich jeweils zwei Rundstangen 16, 17 (in Figur 1 ist nur jeweils eine Rundstange zu erkennen) parallel zu den Querprofilen 44, 45, 46, 47 der Rahmen 11, 12. Die Enden der Hebel 18 der Hubscheren 7 sind mit den Rundstangen 16, 17 befestigt.

An dem Gestell 10 ist hier vorne, an einer Vorderseite V des Fußpodests 1, eine Art gekantetes Blech 20 an einer Oberseite des oberen Rahmens 10 befestigt. Das gekantete Blech 20 weist dabei an seiner Oberseite zwei Auflageflächen bzw. Auflagewinkel 26 auf. Ein Auflagewinkel 26 ist dabei ein rechter Teil des Blechs 20 und ein Auflagewinkel 26 ist ein linker Teil des Blechs 20. Die Auflagewinkel 26 verlaufen leicht schräg nach unten hinten. Die Auflagewinkel 26 sind dabei abgeknickt, d.h. sie weisen zwei verschiedene Auflagebereiche 23, 24 mit jeweils unterschiedlichem Neigungswinkel auf.

An einer Unterseite des Blechs 20 befindet sich ein weiterer abgewinkelter Teil, hier eine Befestigung 21, welche mehrere Löcher 22 aufweist. Die Befestigung 21 erstreckt sich im Wesentlichen horizontal in Längsrichtung L über einen Teilbereich des Grundrahmens 2.

Auf der hinteren Seite des Grundgestells 10 bzw. Hinterseite H des Fußpodests 1 befindet sich am oberen Rahmen 11 eine weitere Auflage bzw. Auflagewinkel 25, der ebenfalls schräg nach hinten unten ausläuft.

An den Ecken der Außenseiten des unteren Rahmens 12 des Gestells 10 befinden sich hier Befestigungslaschen 19, 19',19", über die das Fußpodest 1 im Führerstand 51 eines Schienenfahrzeugs 50 befestigt werden kann. Alternativ kann beispielsweise an die Befestigungslaschen 19, 19',19" zusätzlich und bei Bedarf ein Blech bzw. eine Blende angebracht werden, die das Fußpodest 1 an seinen Seiten umschließt, so dass beispielsweise eine Person nicht mit dem Fuß in das Innere des Fußpodest und somit zwischen den Scherenmechanismus gelangen kann.

Der hier gezeigte Grundrahmen 2 kann für diverse Projekt- und Kundenwünsche genutzt werden, ohne dass seine Abmaße abgeändert werden müssen. Er weist bevorzugt eine maximale Breite von 500 mm auf, besonders bevorzugt von 430 mm.

Bevorzugt weist der Grundrahmen 2 zudem eine maximale Länge von 400 mm auf, besonders bevorzugt von 320 mm.

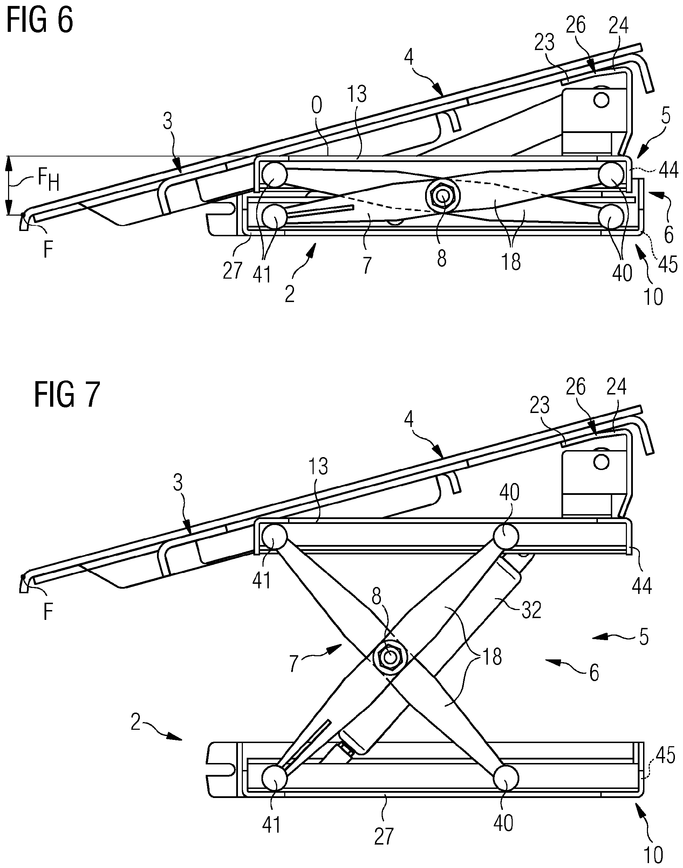

Auch die Höhe des Grundrahmens 2 ist standardisiert. Im zusammengefahrenen Zustand (wie dies in Figur 6 zu sehen ist und die später noch näher erläutert wird), weist der Hubtisch 6, in dem der Hubmechanismus angeordnet ist, d.h. der Grundrahmen 2 ohne die zusätzlichen Komponenten wie das vom oberen Rahmen 11 abgeknickte Blech 20 zur Realisierung der Winkelstellung des Trittblechs 4, bevorzugt eine maximale Höhe von 70 mm auf, besonders bevorzugt von 58 mm.

Im ausgefahrenen Zustand des Grundrahmens 2 (wie es in Figur 7 zu sehen ist und welche später noch näher erläutert wird), weist der Hubtisch 6 bevorzugt eine maximale Höhe von 260 mm auf, besonders bevorzugt von 208 mm.

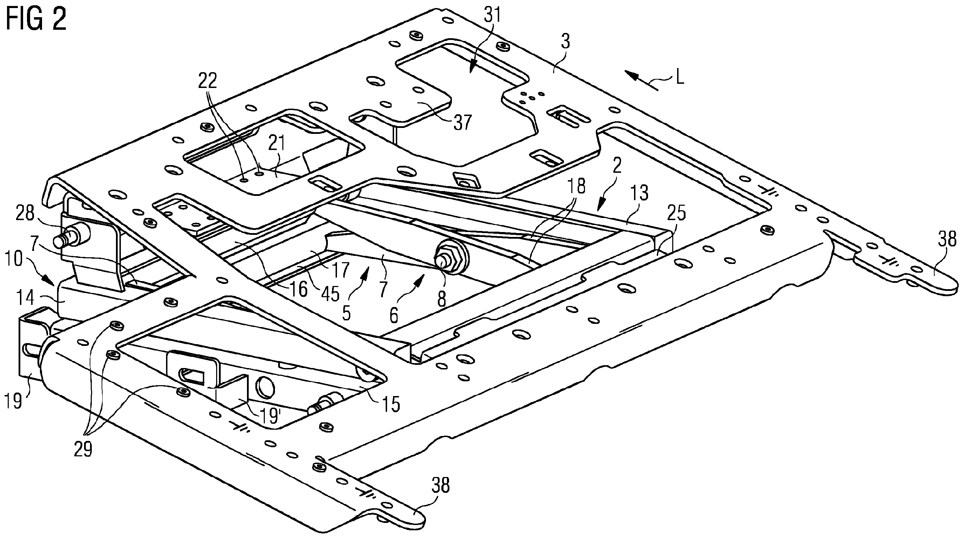

Auf die Auflagen 25, 26 kann dann in einem zweiten Montageschritt ein Zwischenrahmen 3 aufgelegt und mittels Schrauben und/oder Einnietmuttern 29 auf diesem montiert werden. Figur 2 zeigt dazu den Grundrahmen 2 und den darauf montierten Zwischenrahmen 3. Je nachdem, auf welchen Auflagebereich 23, 24 des Auflagewinkels 26 der Zwischenrahmen 3 aufgelegt wird, ergibt sich so der entstehende Neigungswinkel des Zwischenrahmens 3.

Der Zwischenrahmen 3 weist mehrere Ausschnitte auf, durch die beispielsweise Bedienelemente hindurchgeführt werden können. Die Ausschnitte erlauben es außerdem, Wartungsarbeiten z. B. am Höhenverstellmechanismus 5 durchführen zu können, ohne den Zwischenrahmen 3 abmontieren zu müssen.

Um den Hubtisch 6 bzw. die Hubschere 7 zu unterstützen und aufzurichten, um so den Hubtisch 6 vertikal nach oben zu verfahren, wird in einem dritten Montageschritt, parallel zu den Hubscheren 7 wirkend, hier zwei Gasdruckfedern 32 an den Hubtisch 6 angeschlossen (Aufgrund der Perspektive in den Figuren 1 bis 5 ist eine der Gasdruckfedern 32 nur schwer zu erkennen, da diese Gasdruckfeder 32 von den Längsprofilen 13, 27 verdeckt wird). An die Gasdruckfedern 32 sind Bowdenzüge 33 angeschlossen, die mit einem Bedienelement 34 für den Höhenverstellmechanismus 5 verbunden sind.

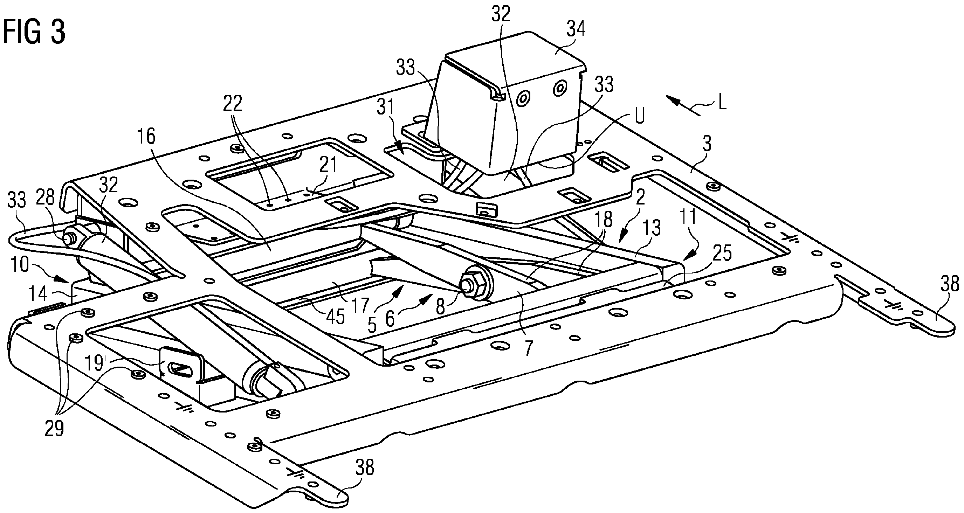

Die Gasdruckfedern 32 mitsamt den Bowdenzügen 33 und dem Bedienelement 34 können bereits vormontiert geliefert werden, sodass sie, wie in Figur 3 gezeigt, als eine zusammenhängende Komponente angebracht werden kann. Sollen diese Komponenten nun montiert werden, werden die Gasdruckfedern 32 mitsamt den Bowdenzügen 33, die mit dem Bedienelement 34 verbunden sind, durch einen Ausschnitt 31 des Zwischenrahmens 3 von oben hindurchgeführt. Die Gasdruckfedern 32 werden dann seitlich außen am Gestell 10 des Grundrahmens 2 mittels Aufnahmen 28 einerseits am Grundrahmenunterteil 12 und andererseits am Grundrahmenoberteil 11 befestigt. Die Gasdruckfedern 32 befinden sich dabei in Längsrichtung L des Grundrahmens 2 auf der linken Seite (siehe Figur 3) und auf der rechten Seite des Grundrahmens 2. Die Bowdenzüge 33 werden, z. B. mittels Schellen oder Kabelbindern oder dergleichen, dann an den Löchern 22 der Befestigung 21 befestigt, sodass sie vor einem Verhaken oder Verknicken geschützt sind.

Das Bedienelement 34 wird auf einer Art Vorsprung 37 bzw. Lasche 37 des Zwischenrahmens 3 montiert, der in einen Ausschnitt 31 des Zwischenrahmens 3 hineinreicht. Somit ist das Bedienelement 34 auf dem Zwischenrahmen 3 angebracht.

Das Bedienelement 34, die Bowdenzüge 33 und die Gasdruckfedern 32 können aber auch einzeln geliefert und vor Ort montiert und miteinander gekoppelt werden.

Der Höhenverstellmechanismus 5 ist nach Anbringung des Bedienelements 34, der Gasdruckfedern 32 und der Bowdenzüge 33 bereits voll funktionsfähig und der Grundrahmen 2 kann in seiner Höhe verstellt werden.

Die Figuren 6 und 7 zeigen hierzu zwei verschiedene Positionen des Grundrahmens 2 mit dem Zwischenrahmen 3 und einem auf ihm angeordneten Trittblech 4 des modularen Fußpodests 1. Zur besseren Übersicht wurden hier die Bedienelemente nicht dargestellt.

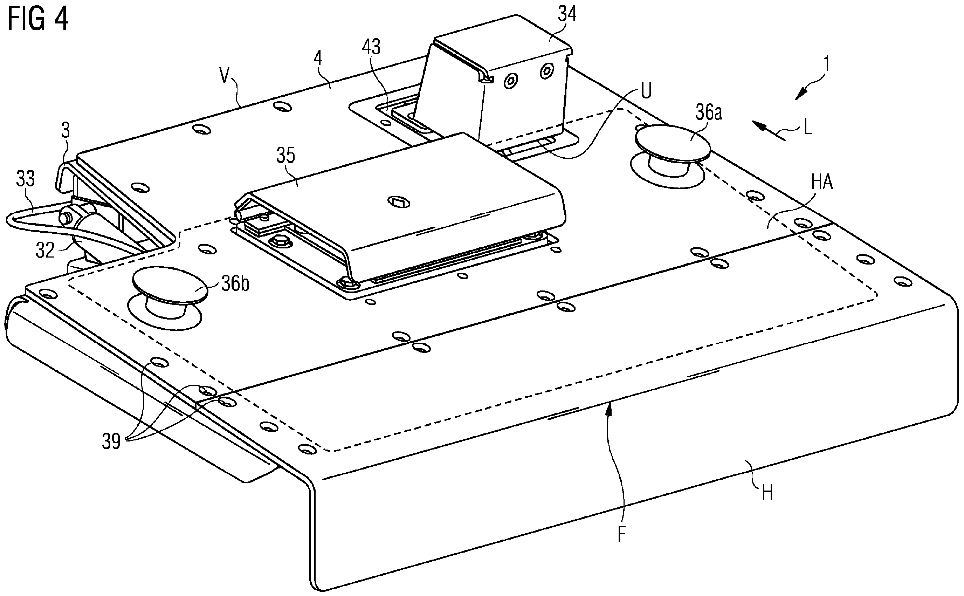

Figur 6 zeigt dabei die Teile des modularen Fußpodests 1 in einer untersten Position bzw. in einem zusammengefahrenen Zustand. Es ist deutlich zu erkennen, dass der Zwischenrahmen 3 in einer Längsrichtung des Grundrahmens 2 weit über diesen nach hinten hinausreicht. Dies ist auch in den Figuren 2 und 3 deutlich zu erkennen. Der Zwischenrahmen 3 weist hier zwei Vorsprünge 38 (siehe Figur 2) auf, auf denen das Trittblech 4 aufgelegt wird, die nach hinten unten über den Grundrahmen 2 hinausreichen. Dementsprechend reicht auch das Trittblech 4 nach hinten unten über den Grundrahmen 2 hinaus. Der Fersenpunkt F eines Fahrzeugführers, der in den Figuren 4 bis 7 exemplarisch eingezeichnet wurde, liegt somit und wie bereits erwähnt, vor dem Grundrahmen 2 und unterhalb der Oberkante O des oberen Rahmens 11 des Gestells 10 des Grundrahmens 2. Der Abstand F_{H} zwischen der Oberkante O des oberen Rahmens 11 und dem Fersenpunkt F beträgt bevorzugt mindestens 30 mm, besonders bevorzugt ca. 34 mm. Hierdurch wurde es ermöglicht, dass bei einer besonders geringen Bauhöhe die Anforderung der EN16186-1 erfüllt wurde.

Figur 7 zeigt diese Teile des modularen Fußpodests 1, in einer zweiten Position, bei der die Hubscheren 7 vertikal nach oben verfahren werden. Aufgrund ihrer Anordnung ist aber nur eine Hubschere 7 in den Figuren 6 und 7 zu erkennen, da die zweite Hubschere 7 von der ersten Hubschere 7 verdeckt ist. Wie hier besonders gut zu sehen ist, ist die Hubschere 7 verschiebbar über zwei hintere vertikal zueinander ausgerichtete Festlager 41 und über zwei vertikal zueinander ausgerichtete vordere Loslager 40 mit den Längsprofilen 13, 27 gekoppelt.

Figur 4 zeigt das zu montierende Fußpodest 1 nach einem weiteren Montageschritt, in welchem das Trittblech 4 von oben auf den Zwischenrahmen 3 aufgelegt wurde. Das Trittblech 4 kann dann mittels Schrauben 39 einfach auf dem Zwischenrahmen 3 montiert werden.

Auf dem Trittblech 4 sind hier ein Sifa-Pedal 35, ein Horntaster 36a und ein Taster 36b, um Spiegel eines Schienenfahrzeugs 50 einzuklappen, bereits vormontiert. Die Komponenten können aber auch erst nach Aufbringen des Trittblechs 4 angebracht werden. Auch eine Anbringung weiterer Komponenten wäre möglich. Auch ist die Anordnung der Komponenten frei wählbar und kann entsprechend angepasst werden.

Das Trittblech 4 zeigt zudem eine Aussparung 43, die entsprechend einer Position des Bedienelements 34 auf dem Zwischenrahmen 3 angeordnet ist, so dass das Bedienelement 34 durch die Aussparung 43 hinausragt.

Das Bedienelement 34 ist außerhalb eines Hauptaktionsbereichs HA für die Füße eines Fahrzeugführers angeordnet. Dadurch bleibt mehr Platz im Hauptaktionsbereich HA, um die genannten anderen Komponenten, wie beispielsweise das Sifa-Pedal 35 oder den Horntaster 36a, im Hauptaktionsbereich HA anzuordnen, welche häufiger und schneller bzw. leichter erreicht werden müssen, als das Bedienelement 34 zur Höhenverstellung des Fußpodests 1.

In einem letzten Montageschritt werden zwei Abdeckbleche 30a, 30b nebeneinander zwischen das Trittblech 4 und eine Unterkante U des Bedienelements 34 geschoben, so dass die Aussparung 43 hier vollständig abgedeckt wird. Soll nun beispielsweise das Trittblech 4 entfernt werden, um an Funktionsteile im Fußpodest 1 leichter heran zu kommen, so können einfach die Abdeckbleche 30a, 30b herausgenommen werden und das Trittblech 4 kann wieder über das Bedienelement 34 nach oben abgezogen und entfernt werden. Weiter können dann das Bedienelement 34 gegebenenfalls mitsamt der Bowdenzüge 33 und der Gasdruckfedern 32 leicht gewartet oder ausgetauscht werden.

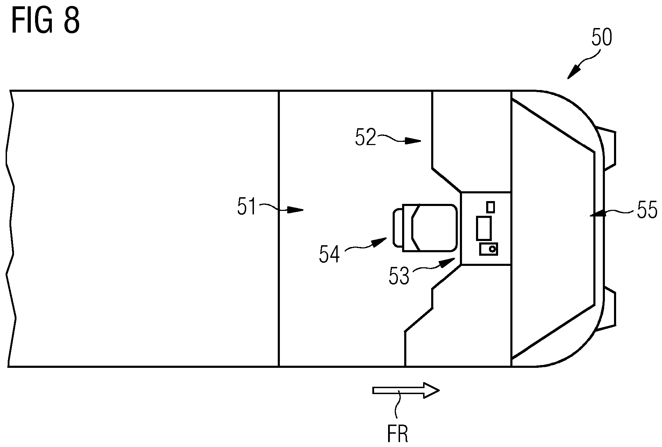

Figur 8 zeigt den vorderen Teil eines Schienenfahrzeugs 50, in dem sich ein Führerstand 51 eines Fahrzeugführers befindet. In Fahrtrichtung FR des Schienenfahrzeugs 50 befindet sich vorne wie üblich eine Frontscheibe 55. Hinter der Frontscheibe 55 ist im Führerstand 51 ein Fahrerpult 52 angeordnet. Zudem befindet sich hinter dem Fahrerpult 52 hier ein Fahrerstuhl 54 auf dem der Fahrzeugführer sitzen kann. Vor dem Fahrerstuhl 54 und hinter der Scheibe 55 ist im Fahrerpult 52 eine Fußnische 53, in der das erfindungsgemäße modulare Fußpodest 1 angeordnet ist.

Es wird abschließend noch einmal darauf hingewiesen, dass es sich bei der vorhergehend detaillierten beschriebenen Vorrichtung lediglich um Ausführungsbeispiele handelt, welche vom Fachmann in verschiedenster Weise modifiziert werden können, ohne den Bereich der Erfindung zu verlassen. So können beispielsweise das Trittblech und der Zwischenrahmen im Rahmen der Ansprüche beliebig ausgestaltet werden und mit dem Grundrahmen kombiniert werden. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass die betreffenden Komponenten aus mehreren zusammenwirkenden Teil-Komponenten bestehen, die gegebenenfalls auch räumlich verteilt sein können.

## Patentansprüche

1. Modulares Fußpodest (1) für einen Führerstand eines Schienenfahrzeugs, umfassend zumindest die folgenden Komponenten:
- einen Grundrahmen (2), welcher einen Höhenverstellmechanismus (5) aufweist,
- einen auf dem Grundrahmen (2) angebrachten Zwischenrahmen (3),
- ein auf dem Zwischenrahmen (3) angeordnetes Trittblech (4),
- bei dem der Höhenverstellmechanismus (5) zumindest ein Bedienelement (34) umfasst, welches zumindest teilweise in einem Bereich auf oder oberhalb der vom Grundrahmen (2) wegweisenden Oberseite des Trittblechs (4) angeordnet ist,
- bei dem die Grundabmessung des Grundrahmens und des dazu gehörenden Höhenverstellmechanismus für unterschiedliche Anforderungen identisch sind, um eine Vielzahl von Fahrzeug- und Projektanforderungen ohne Abänderungen oder Anpassungen zu erfüllen,
- bei dem mit dem Bedienelement der Höhenverstellmechanismus durch Antippen eines Fahrzeugführers mit dem Fuß auslösbar ist,
- bei dem das Bedienelement für die Füße eines Fahrzeugführers bequem erreichbar aber außerhalb eines Hauptaktionsbereichs der Füße angeordnet ist,
- bei dem der Höhenverstellmechanismus (5) einen Scherenhubtisch (6) mit zumindest einer Hubschere (7) umfasst,
- bei dem die Hubschere (7) in einer Längsrichtung (L) des Fußpodests seitlich im Grundrahmen angeordnet ist, wobei als Längsrichtung des Fußpodests eine Richtung zwischen einem Fersenpunkt und einer Front des Fußpodests definiert ist und die Längsrichtung in Fahrtrichtung eines Schienenfahrzeugs verläuft, in dem das Fußpodest montiert wird.

2. Modulares Fußpodest nach einem der vorstehenden Ansprüche, wobei der Höhenverstellmechanismus (5) zumindest eine Feder (32), vorzugsweise zumindest eine Gasdruckfeder (32), umfasst.

3. Modulares Fußpodest nach Anspruch 2, wobei der Höhenverstellmechanismus (5) zumindest einen Bowdenzug (33) umfasst, welcher mit der Feder (32) und dem Bedienelement (34) verbunden ist.

4. Modulares Fußpodest nach einem der Ansprüche 2 bis 3, wobei die Feder (32) in einer Längsrichtung (L) des Fußpodests (1) im Grundrahmen (2) angeordnet ist.

5. Modulares Fußpodest nach einem der vorstehenden Ansprüche, wobei der Grundrahmen (2) zumindest zwei Auflagebereiche (23, 24) für den Zwischenrahmen (3) aufweist, wobei die Auflagebereiche (23, 24) unterschiedliche Winkelstellungen zu einer Unterseite des Fußpodests (1) aufweisen.

6. Modulares Fußpodest nach einem der vorstehenden Ansprüche, wobei der Grundrahmen (2) zumindest eine Befestigung (21) aufweist, an welchem der Bowdenzug (33) angebracht ist.

7. Modulares Fußpodest nach einem der Ansprüche 1 bis 6, wobei ein Fersenpunkt (F) auf dem Trittblech (4) unterhalb einer Oberkante (O) des Hubtisches (6) liegt.

8. Modulares Fußpodest nach einem der vorstehenden Ansprüche, wobei eine Unterkante (U) des Bedienelements (34) in einem Abstand von maximal 10 mm, bevorzugt maximal 5 mm, auf der vom Grundrahmen (2) wegweisenden Oberseite des Trittblechs (4) angeordnet ist.

9. Modulares Fußpodest nach einem der vorstehenden Ansprüche, wobei das Trittblech (4) eine Aussparung (43) für das Bedienelement (34) aufweist und zwischen dem Bedienelement (34) und der vom Grundrahmen (2) wegweisenden Oberseite des Trittblechs (4) zumindest ein Abdeckblech (30a, 30b) angeordnet ist, welches die Aussparung (43) zumindest teilweise abdeckt.

10. Schienenfahrzeug (50) mit einem Führerstand (51) und einem darin angeordneten modularem Fußpodest (1) nach einem der vorstehenden Ansprüche.

## Claims

1. Modular foot platform (1) for a driver's cab of a rail vehicle, comprising at least the following components:
- a base frame (2) which has a height adjustment mechanism (5),
- an intermediate frame (3) mounted on the base frame (2),
- a step plate (4) arranged on the intermediate frame (3),
- in which the height adjustment mechanism (5) comprises at least one operating element (34) which is at least partially arranged in a region on or above the top side of the step plate (4), the top side facing away from the base frame (2),
- in which the basic size of the base frame and of the height adjustment mechanism belonging thereto are identical for different requirements in order to meet a multiplicity of vehicle and project requirements without modifications or adaptations,
- in which, with the operating element, the height adjustment mechanism can be triggered by tapping by means of a vehicle driver's foot,
- in which the operating element is comfortably reachable for a vehicle driver's feet, but is arranged outside a main action region of the feet,
- in which the height adjustment mechanism (5) comprises a scissor-mechanism lifting table (6) having at least one lifting scissor mechanism (7),
- in which the lifting scissor mechanism (7) is arranged laterally in the base frame in a longitudinal direction (L) of the foot platform, wherein the longitudinal direction of the foot platform is defined as being a direction between a heel point and a front of the foot platform, and the longitudinal direction runs in the direction of travel of a rail vehicle in which the foot platform is mounted.

2. Modular foot platform according to one of the preceding claims, wherein the height adjustment mechanism (5) comprises at least one spring (32), preferably at least one gas-filled compression spring (32).

3. Modular foot platform according to Claim 2, wherein the height adjustment mechanism (5) comprises at least one Bowden cable (33) which is connected to the spring (32) and to the operating element (34).

4. Modular foot platform according to either of Claims 2 and 3, wherein the spring (32) is arranged in the base frame (2) in a longitudinal direction (L) of the foot platform (1).

5. Modular foot platform according to one of the preceding claims, wherein the base frame (2) has at least two supporting regions (23, 24) for the intermediate frame (3), wherein the supporting regions (23, 24) have different angular positions with respect to a lower side of the foot platform (1).

6. Modular foot platform according to one of the preceding claims, wherein the base frame (2) has at least one fastening (21) to which the Bowden cable (33) is attached.

7. Modular foot platform according to one of Claims 1 to 6, wherein a heel point (F) lies on the step plate (4) below an upper edge (O) of the lifting table (6).

8. Modular foot platform according to one of the preceding claims, wherein a lower edge (U) of the operating element (34) is arranged at a distance of at maximum 10 mm, preferably at maximum 5 mm, on the top side of the step plate (4), said top side facing away from the base frame (2).

9. Modular foot platform according to one of the preceding claims, wherein the step plate (4) has a cutout (43) for the operating element (34), and at least one covering plate (30a, 30b) which at least partially covers the cutout (43) is arranged between the operating element (34) and the top side of the step plate (4), said top side facing away from the base frame (2).

10. Rail vehicle (50) having a driver's cab (51) and a modular foot platform (1) arranged therein according to one of the preceding claims.

## Revendications

1. Repose-pied modulaire (1) pour un poste de conduite d'un véhicule sur rails, comprenant au moins les composants suivants :
- un cadre de base (2) qui présente un mécanisme de réglage en hauteur (5),
- un cadre intermédiaire (3) agencé sur le cadre de base (2),
- une tôle de marchepied (4) disposée sur le cadre intermédiaire (3),
- dans lequel le mécanisme de réglage en hauteur (5) comprend au moins un élément de commande (34), lequel est disposé au moins partiellement dans une zone sur ou au-dessus du côté supérieur, s'écartant du cadre de base (2), de la tôle de marchepied (4),
- dans lequel la dimension de base du cadre de base et du mécanisme de réglage en hauteur en faisant partie sont identiques pour différentes exigences afin de satisfaire à une pluralité d'exigences de véhicule et de projet sans modifications ou adaptations,
- dans lequel avec l'élément de commande, le mécanisme de réglage en hauteur peut être débloqué par effleurement avec le pied d'un conducteur de véhicule,
- dans lequel l'élément de commande pour les pieds d'un conducteur de véhicule est disposé en étant facilement accessible mais à l'extérieur d'une zone d'action principale des pieds,
- dans lequel le mécanisme de réglage en hauteur (5) comprend une table élévatrice à ciseaux (6) avec au moins un ensemble de levage à ciseaux (7),
- dans lequel l'ensemble de levage à ciseaux (7) est disposé latéralement dans le cadre de base dans un sens longitudinal (L) du repose-pied, dans lequel comme sens longitudinal du repose-pied est défini un sens entre un point talon et une face avant du repose-pied et le sens longitudinal passe dans le sens de circulation d'un véhicule sur rails, dans lequel est monté le repose-pied.

2. Repose-pied modulaire selon l'une des revendications précédentes, dans lequel le mécanisme de réglage en hauteur (5) comprend au moins un ressort (32), de préférence au moins un ressort pneumatique (32).

3. Repose-pied modulaire selon la revendication 2, dans lequel le mécanisme de réglage en hauteur (5) comprend au moins un câble Bowden (33), lequel est relié au ressort (32) et à l'élément de commande (34).

4. Repose-pied modulaire selon l'une des revendications 2 à 3, dans lequel le ressort (32) est disposé dans un sens longitudinal (L) du repose-pied (1) dans le cadre de base (2).

5. Repose-pied modulaire selon l'une des revendications précédentes, dans lequel le cadre de base (2) présente au moins deux zones d'appui (23, 24) pour le cadre intermédiaire (3), dans lequel les zones d'appui (23, 24) présentent différentes positions angulaires par rapport à un côté inférieur du repose-pied (1).

6. Repose-pied modulaire selon l'une des revendications précédentes, dans lequel le cadre de base (2) présente au moins une fixation (21) sur laquelle est agencé le câble Bowden (33).

7. Repose-pied modulaire selon l'une des revendications 1 à 6, dans lequel un point talon (F) est situé sur la tôle de marchepied (4) au-dessous d'une arête supérieure (O) de la table élévatrice (6).

8. Repose-pied modulaire selon l'une des revendications précédentes, dans lequel une arête inférieure (U) de l'élément de commande (34) est disposée à une distance de 10 mm au maximum, de préférence de 5 mm au maximum, sur le côté supérieur, s'écartant du cadre de base (2), de la tôle de marchepied (4).

9. Repose-pied modulaire selon l'une des revendications précédentes, dans lequel la tôle de marchepied (4) présente un évidement (43) pour l'élément de commande (34) et entre l'élément de commande (34) et le côté supérieur, s'écartant du cadre de base (2), de la tôle de marchepied (4) est disposée au moins une tôle de recouvrement (30a, 30b), laquelle recouvre l'évidement (43) au moins partiellement.

10. Véhicule sur rails (50) avec un poste de conduite (51) et un repose-pied modulaire (1) selon l'une des revendications précédentes agencé à l'intérieur.
